# EUROPEAN PATENT APPLICATION

(11) **EP 3 875 645 A1**
(43) Date of publication of application: **08.09.2021**
(21) Application number: 21161116.5
(22) Date of filing: 05.03.2021
(51) Int. Cl.: D01D 5/42, D03D 15/292, D02G 3/32, D03D 15/56, D02G 3/40

(54) **METHOD FOR CUTTING COMPOSITE MEMBRANE MATERIAL WITH ELASTIC MEMBRANE MATERIAL AND COMPOSITE FILAMENT WITH ELASTIC FILAMENT**

(30) Priority: 06.03.2020 TW 109107531
(71) Applicant: Chance Line Industrial Co., Ltd., Changhua County (TW)
(72) Inventor: YAO, Ming-Hsien, Siansi Township Changhua County (TW)
(74) Representative: Lang, Christian

(57) **Abstract**

The invention provides a method for cutting a composite membrane material, firstly, manufacturing a composite membrane material, the composite membrane material is formed by combining an elastic membrane material with at least one shaping membrane, the elastic membrane material has stretchability and elasticity; the shaping membrane is capable of dissolving in water, and a rigidity thereof is greater than that of the elastic membrane material, and a ductility thereof is lower than that of the elastic membrane material; and cutting the composite membrane material into a plurality of composite filaments with a cutting device, and each of the composite filaments comprises an elastic filament and at least one shaping filament. The composite filament can be used by textile machinery to make textiles. Dissolving the shaping filament in the composite filament is capable of obtaining the elastic filament.

## Description

### BACKGROUND OF THE INVENTION

### Field of Invention

The invention relates to a composite filament that can be made into an elastic filament and a manufacturing method thereof, and more particularly to a manufacturing method for cutting a composite filament out from a composite membrane material and the manufactured composite filament.

### Related Art

In the conventional method of making yarns by cutting a membrane material, the selected membrane material is PET (polyethylene terephthalate) material. With the rigidity of the PET material, the PET membrane material can be cut into yarns. However, PET is a material for making mineral water bottles and is not suitable for making fabrics. The yarn of PET material is not soft and flexible, and causes a sharp, hard and tingling sensation, and therefore it is not suitable for wearing, and cannot be used for making fabrics.

The conventional techniques are incapable of cutting elastic yarns out from an elastic membrane material. The reasons are that the material of the elastic membrane material is soft and flexible, easy to elastically stretch, deform and flex, resulting in the cutting tool being incapable of cutting the elastic membrane material reliably and being incapable of cutting the elastic membrane material into elastic yarns with uniform width. And the greater the elasticity of the elastic membrane material, the more likely that it is difficult for the cutting tool to cut off the elastic membrane material. Especially if multiple cutting tools are used to cut one sheet of elastic membrane material into a plurality of yarns at the same time, and if one of the cutting tools does not cut off the elastic membrane material, the cut yarn will become a defective product, and the elastic membrane material must be scrapped. Moreover, the flexible and elastic membrane material is likely to be corrugated during cutting, and parts of its material will be stacked on top of each other, which will affect the implementation of cutting and form defective products.

In order to overcome the drawbacks disclosed above, the inventor has developed a patent application with application No. EP20181256.7, which discloses a method for cutting an elastic membrane material. Please refer to FIG. 1, in which an elastic membrane material 10 is separably bonded with a cushion layer 12 made of PET material, the cushion layer 12 has low stretchability and has rigidity and hardness higher than that of the elastic membrane material 10; the elastic membrane material 10 and the cushion layer 12 are pulled by rollers 14, and a cutting tool 16 is used to cut the material to be cut. The cushion layer 12 is used to support the elastic membrane material 10 so as to cut the elastic membrane material 10 into a plurality of elastic yarns 17. After cutting is completed, the elastic yarns 17 are separated from the cushion layer 12, and a cut product of each of the elastic yarns 17 is wound into a roll 18 for subsequent use, and the cushion layer 12 is wound into a roll 19.

The manufacturing method disclosed above is capable of effectively cutting the elastic membrane material 10 and overcomes the drawback that the conventional techniques are incapable of cutting an elastic membrane material. Since the cushion layer 12 is only a means used for cutting the elastic membrane material 10, after the elastic membrane material 10 is cut into the elastic yarns 17, operations of separating the elastic yarns 17 from the cushion layer 12 and winding them up separately must be carried out; and therefore the manufacturing procedures are still too cumbersome and inconvenient. With the spirit of insisting on constantly improving and striving for perfection, the inventor has researched and developed the invention to overcome the drawbacks of the above-disclosed manufacturing method.

Furthermore, the produced elastic yarn 17 has stretchable elasticity, the tension is not fixed, can not withstand hooking and pulling of the crochet hook of a knitting machine, and can be pulled apart easily, so it is difficult to make a textile with the elastic yarn 17 using textile machinery.

### SUMMARY OF THE INVENTION

A main object of the invention is to provide a method for cutting a composite material, which is capable of cutting a composite membrane material containing an elastic membrane material so as to be capable of cutting the elastic membrane material and simplifying a manufacturing process.

Another object of the invention is to provide a composite filament made by the above-disclosed manufacturing method, the composite filament has an elastic filament and has the characteristics of low elasticity and low stretchability, which can be used for textile machines to make textiles, and the composite filament has a dissoluble rigid component to be capable of retaining the elastic filament conveniently.

A method for cutting a composite membrane material provided by the invention comprises:
manufacturing a composite membrane material, the composite membrane material is formed by combining an elastic membrane material with at least one shaping membrane, the elastic membrane material has stretchability and elasticity; the shaping membrane is made of high-molecular polymer, has solubility and is capable of dissolving in water; a rigidity of the shaping membrane is greater than that of the elastic membrane material, and a ductility of the shaping membrane is lower than that of the elastic membrane material; and
cutting the elastic membrane material and the shaping membrane of the composite membrane material with a cutting device, and cutting the composite membrane material into a plurality of composite filaments, each of the composite filaments is a composite with at least two layer structures, comprising an elastic filament and at least one shaping filament combined with each other, the elastic filament is formed by the elastic membrane material; and the shaping filament is formed by the shaping membrane.

Thereby, after the composite filament is made, the shaping filament can be dissolved, retaining only the required elastic filament.

Preferably, a material of the shaping membrane is polyvinyl alcohol.

The composite filament with the elastic filament provided by the invention has a rectangular cross-section and is a layered structure with at least two layers of an upper layer and a lower layer, comprising: an elastic filament and at least one shaping filament, the elastic filament is made of high-molecular material/high-molecular polymer, has stretchability and elasticity; the shaping filament is made of high-molecular polymer and capable of dissolving in water; a rigidity of the shaping filament is greater than that of the elastic filament, and a ductility of the shaping filament is lower than that of the elastic membrane filament.

Thereby, the shaping filament of the composite filament can be dissolved to obtain the required elastic filament.

The composite filament has low elasticity, low stretchability, and has a certain tension, and is capable of withstanding hooking and pulling by textile machinery without breaking. Therefore, the composite filament can be woven into a textile using a textile machine, and the shaping filament can be dissolved to make the textile become a fabric made of the elastic filament to provide elastic, soft, flexible and comfortable wearing.

The composite filament can also be used as an embroidery thread or a sewing thread sewn with a sewing machine.

The method for cutting the composite material with the elastic membrane material provided by the invention is capable of combining the elastic membrane material and the shaping membrane to form the composite membrane material, which causes the composite membrane material to be suitable for cutting. The shaping membrane restricts stretching and contracting of the elastic membrane material and supports the elastic membrane material, therefore, the elastic membrane material can be cut off effectively. In addition, the shaping membrane has a solubility, there's no need to separate the elastic filament from the shaping filament of the cut finished composite filament, and thus simplifying the process of cutting the elastic membrane material. The composite filament provided by the invention has several physical properties and phenomena, such as having a rigidity, low elasticity and low stretchability and being capable of withstanding a tensile force. Hence, the composite filament can be directly made into textile products by textile machinery. Afterwards, the shaping filament of the composite filament is dissolved and the elastic filament is retained, and as a consequence, the final finished textile product is made solely with the elastic filament, which overcomes the drawback of the conventional techniques that the elastic filaments cannot be directly made into a textile product.

### BRIEF DESCRIPTION OF THE DRAWINGS

The objects, features, and achieved efficacies of the invention can be understood from the description and drawings of the following preferred embodiments, in which:

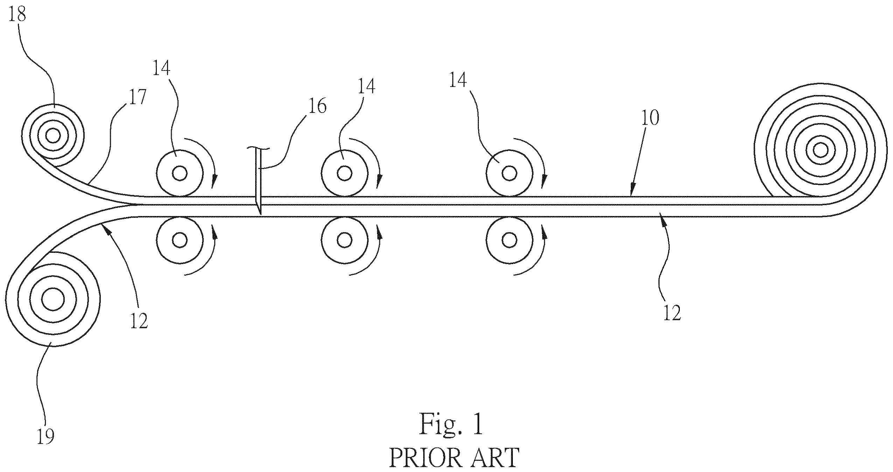

FIG. 1 is a schematic diagram of a conventional method for cutting an elastic membrane material;
FIG. 2 is a schematic diagram of a manufacturing process of a method for cutting a composite membrane material according to a preferred embodiment of the invention;
FIG. 3 is a perspective view of FIG. 2;
FIG. 4 is a schematic, cross-sectional view taken along section line 4-4 of FIG. 2;
FIG. 5 is a schematic, cross-sectional view taken along section line 5-5 of FIG. 2;
FIG. 6 shows a composite filament made by cutting according to a preferred embodiment of the invention;
FIG. 7 shows an elastic filament made from the composite filament of FIG. 6;
FIG. 8 (FIG. 8A to FIG. 8G) is schematic diagrams of several structures of the elastic filament of the invention;
FIG. 9 is a schematic diagram of the composite filaments of the invention woven into a textile;
FIG. 10 is a schematic diagram after dissolving shaping filaments in the textile of FIG. 9, at this time, the textile is only composed of the elastic filaments;
FIG. 11 is a back partial enlarged cross-sectional view of two-layer textiles, showing a schematic diagram of the composite filaments of the invention being used as sewing threads;
FIG. 12 is a schematic view after dissolving the shaping filaments in the two-layer textiles of FIG. 11;
FIG. 13 is a partial enlarged cross-sectional view of a textile, showing the composite filaments of the invention being used as embroidery threads; and
FIG. 14 is a partial enlarged cross-sectional view of the textile after dissolving the shaping filaments of the composite filaments of FIG. 13.

### DETAILED DESCRIPTION OF THE INVENTION

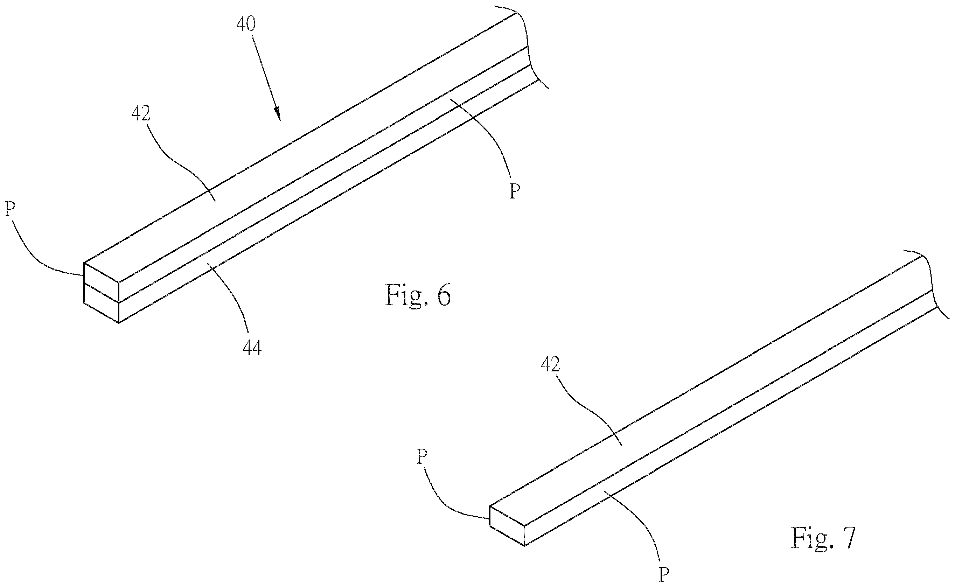

The invention provides a cutting method for cutting a stretchable elastic membrane material into a plurality of composite filaments 40 with a considerable length as shown in FIG. 6, and then the composite filament 40 is formed into an elastic filament (elastic yarn) 42 of FIG. 7, and the method of the invention is suitable for cutting a composite membrane material into fine composite filaments, for example, the composite filaments 40 with a width of 0.05 mm to 0.5 mm, then making the composite filaments 40 into the elastic filaments 42 with a width of 0.05 mm to 0.5 mm; preferably, the fine composite filaments 40 with a width of 0.1 mm to 0.14 mm. The composite filaments 40 can be made into a final product, such as woven into textiles (such as cloth, fabric), for making clothes, shoes, bags (handbag, backpack), pouches (hand-pouch, shoulder pouch), straps (belt, webbing), etc., or can be used as embroidery threads or sewing threads sewn with a sewing machine. Then, the composite filament 40 is converted into the elastic filament 42, so that the elastic filament 42 can provide a soft, flexible and comfortable feeling of wearing for a final product, such as clothing.

Items or a quantity of the items shown in the drawings of the invention are for illustrative purposes, not representing the actual conditions or quantity of the items. For example, the elastic membrane material shown in the drawings is only for illustration, and a certain number of cutters shown in the drawings is also merely for illustration, it is not an actual quantity of the cutters, and neither is it a restriction on the type of the cutters.

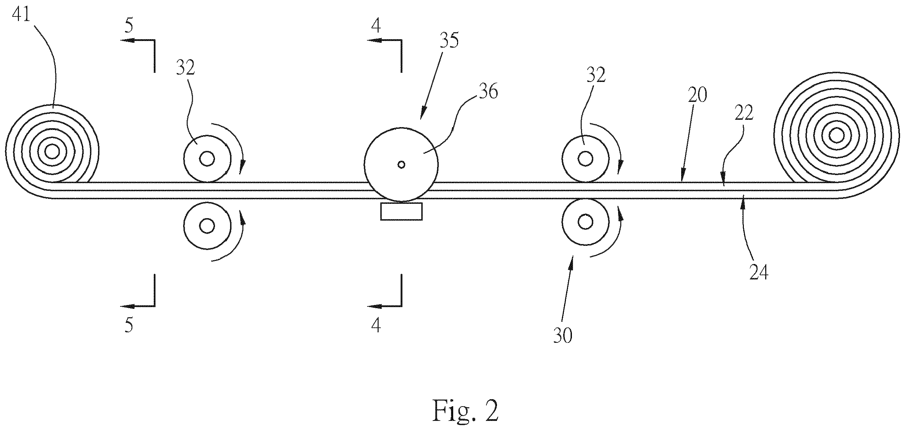

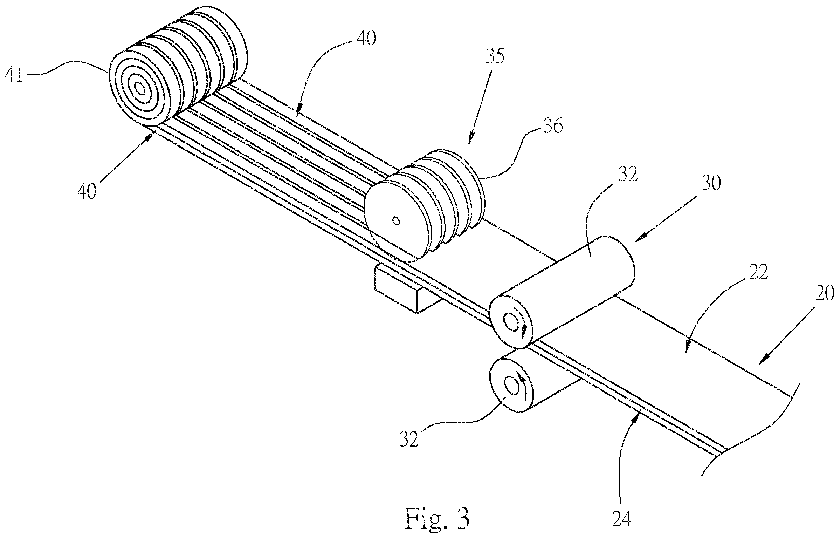

FIGS. 2 and 3 are schematic diagrams of a cutting method according to a preferred embodiment of the invention. The invention is used to continuously cut a composite membrane material 20 comprising an elastic membrane material 22 into a plurality of composite filaments 40 shown in FIG. 6. The elastic membrane material 22 is an elastic membrane material 22 with stretchable elasticity made of plastic or rubber high-molecular material/high-molecular polymer, the plastic or rubber high-molecular material/high-molecular polymer can be, but is not limited to PU (polyurethane), PVC (polyvinyl chloride), TPU (thermoplastic polyurethanes) elastomer rubber, TPE (thermoplastic elastomer), TPR (thermoplastic rubber) or silicone of high polymer material. A membrane (the elastic membrane material 22) made of the above materials has stretchable elasticity and is soft and flexible. A thickness T of the elastic membrane material 22 is in a range of 0.09 to 0.5 mm, preferably 0.1 to 0.28 mm. Each of the afore-mentioned various high-molecular materials has its own melting point.

The composite membrane material 20 further comprises at least one shaping membrane 24; the elastic membrane material 22 is combined with the shaping membrane 24 in a top and bottom arrangement to form the composite membrane material 20. The shaping membrane 24 is made of high-molecular material/high-molecular polymer and has solubility. The shaping membrane 24 can be dissolved in a specific medium (such as liquid) and specific conditions (such as temperature), and a dissolution temperature of the shaping membrane 24 is lower than a melting point of the elastic membrane material 22, for example, the melting point of the elastic membrane material 22 is higher than 100°C, and the shaping membrane 24 is dissolved in a liquid at a temperature lower than the melting point of the elastic membrane material 22. In the invention, the shaping membrane 24 is made of polyvinyl alcohol (PVA) of high-molecular polymer, which is non-toxic, non-irritating, environmentally friendly, and does not harm the environment, and can be dissolved in water at 0-100°C, for example, being dissolved in water at room temperature to 75°C. The solid shaping membrane 24 has low stretchability and retractility, and has a certain tension (fixed tension). Depending on a degree of alkalinity, a temperature at which the shaping membrane 24 (PVA membrane) dissolves in water is also different. In the invention, the elastic membrane material with a melting point lower than 100°C (such as the elastic membrane material with a melting point of 80°C) can be chosen, and the shaping membrane is dissolved in water at a temperature below the melting point (80 °C) of the elastic membrane material.

The shaping membrane 24 and the elastic membrane material 22 can be combined in a variety of ways. For example, after the elastic membrane material 22 is made first, liquid polyvinyl alcohol is coated on one surface of the elastic membrane material 22 to shape and form the shaping membrane 24, and then the elastic membrane material 22 is combined with the shaping membrane 24 to form the composite membrane material 20; alternatively, the shaping membrane 24 is made first, and then a liquid high-molecular material is coated on one surface of the shaping membrane 24 to form the elastic membrane material 22 and combine the elastic membrane material 22 with the shaping membrane 24; alternatively, after the elastic membrane material 22 and the shaping membrane 24 are made separately, the elastic membrane material 22 and the shaping membrane 24 are combined with each other with static electricity or an adhesive to form the composite membrane material 20.

The shaping membrane 24 of the invention has rigidity and a certain tension, the tension at various positions is fixed, and the stretchability and elasticity are low, so that the elastic membrane material 22 is restrained by the shaping membrane 24 to maintain a fixed shape, form and contour, and a rigidity of the shaping membrane 24 is greater than a rigidity of the elastic membrane material 22, for example, the shaping membrane 24 is at least several times the rigidity of the elastic membrane material 22. The shaping membrane 24 makes the composite membrane material 20 as a whole have low stretchability, low retractility, low elasticity and a certain tension, so that the composite membrane material 20 can be cut, thereby the elastic membrane material 22 can be cut. After the composite membrane material 20 is made, cutting operation can be directly performed without the composite membrane material 20 being rolled up; or cutting operation can be performed after the composite membrane material 20 being wound into a roll.

The composite membrane material 20 can be a sandwich membrane material formed by the elastic membrane material 22 and the two shaping membranes 24, wherein the elastic membrane material 22 is located between the two shaping membranes 24. This specification uses one elastic membrane material combined with one shaping membrane to form a composite membrane material as an illustration.

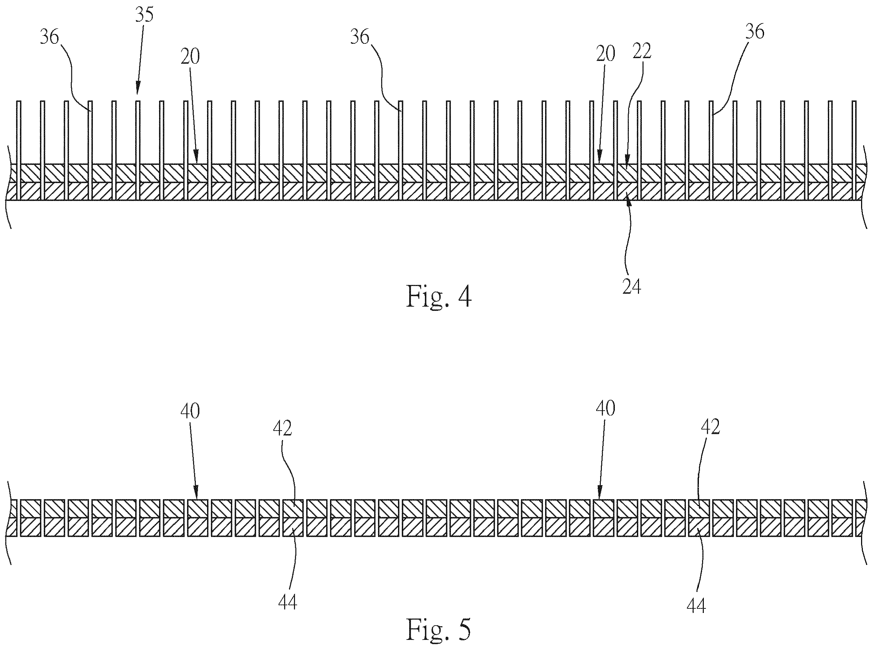

Please refer to FIGS. 2 and 3, the composite membrane material 20 is drawn by a number of rollers 32 of a conveying device 30, continuously fed toward a cutting device 35, and cut by a plurality of cutters 36 of the cutting device 35, as shown in FIG. 4. And then the composite membrane material 20 is cut into finished products of a plurality of the composite filaments 40 along a longitudinal direction of the composite membrane material 20, as shown in FIG. 5. Each of the composite filaments 40 is rolled up into a roll 41 for subsequent use. After being cut and wound into the roll 41, each of the composite filaments 40has its elastic filament 42 and shaping filament 44 kept combined with each other. In this embodiment, the composite membrane material 20 with a considerable length is being cut, for example, a length of 3000 meters to 4000 meters long. Therefore, each of the composite filaments 40 with a length of 3000 meters to 4000 meters long can be cut out.

FIG. 6 shows the composite filament 40 cut out and made from the composite membrane material 20. Based on the directions of FIG. 6, the composite filament 40 is a composite with at least two layers arranged on top and at bottom, and the two layers are respectively the elastic filament (elastic yarn) 42 and the shaping filament (shaping yarn) 44 combined with each other. A cross-section of the composite filament 40 is rectangular, and two sides of the composite filament 40 are planes P formed by cutting with the cutters 36. When the composite filament 40 of FIG. 6 is placed in water at 0-100° C, the shaping filament 44 will dissolve in the water. After dissolution, the elastic filament 42 shown in FIG. 7 remains. A material of the elastic filament 42 is polyurethane (PU), polyvinyl chloride (PVC), thermoplastic polyurethane (TPU) elastomer rubber, thermoplastic elastomer (TPE), thermoplastic rubber (TPR) or silicone of high-molecular material/high-molecular polymer, with stretchable elasticity and is soft and flexible.

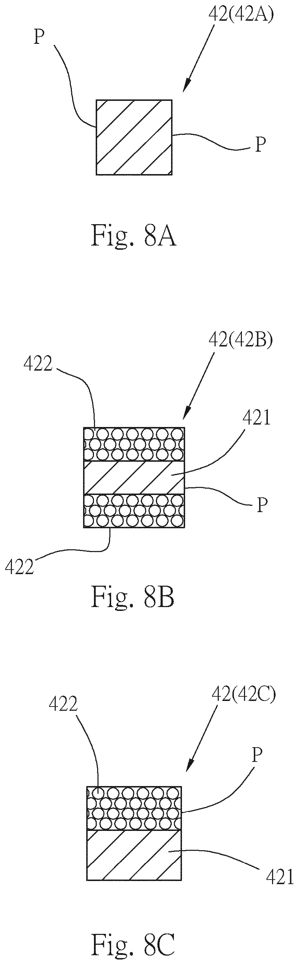

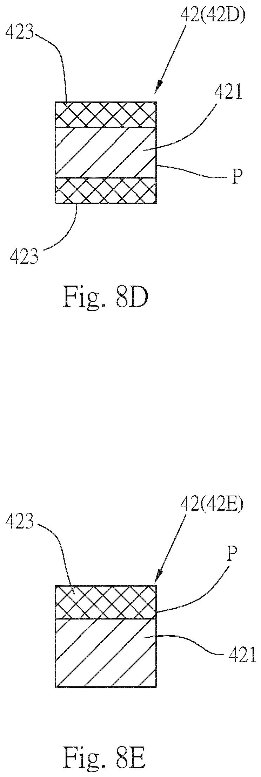

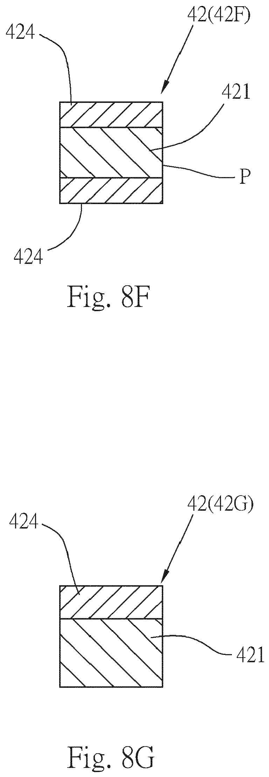

Since the composite membrane material 20 provided by the invention is cuttable, the elastic membrane material 22 of various different materials can be combined with the shaping membrane 24 to form the composite membrane material 20, and the composite membrane material 20 is cut into the composite filament 40 in FIG. 6. The shaping filament 44 of the composite filament 40 is finally dissolved to obtain the elastic filament 42 in FIG. 7. When the elastic membrane material 22 is made with a luminescent, a light-reflective, or an electric-conductive functional layer, the fabricated elastic filament 42 has a luminescent, a light-reflective, or an electric-conductive function. FIG. 8 shows cross-sectional views of the several elastic filaments 42 of the invention. A cross-sectional shape of each of the elastic filaments 42 is rectangular, two sides thereof are a pair of the parallel cut planes P, and top and bottom surfaces thereof are also flat surfaces. The top surface and the bottom surface of the elastic filament 42 are respectively formed by a top surface and a bottom surface of the elastic membrane material 22. Among the elastic filaments 42, an elastic filament 42A in FIG. 8A is a homogeneous high-molecular material; elastic filaments 42B and 42C shown in FIG. 8B and FIG. 8C are composite structural elastic filaments with a light-reflective function, and have a body 421 of high-molecular material, at least one surface of the body 421 is provided with a light-reflective layer 422, and the light-reflective layer 422 has light-reflective particles (such as glass microbeads); elastic filaments 42D and 42E shown in FIGS. 8D and 8E are composite structural elastic filaments with a luminescent function, at least one surface of the body 421 is provided with a luminescent layer 423, and the luminescent layer 423 has luminescent particles; and elastic filaments 42F and 42G shown in FIGS. 8F and 8G are composite structural elastic filaments with an electric-conductive function, at least one surface of the body 421 is provided with an electric-conductive layer 424, for example, an electric-conductive layer formed with an electric-conductive paste. The functional layer provided on the surface of the elastic filament 42 is not limited to luminescent layer, light-reflective layer, or electric-conductive layer, for example, the functional layer can be a color layer made to have different colors, or can be a functional layer with other functions, for example, the functional layer contains metal powder and has a metallic color and metallic luster. The elastic filament 42A or the body 421 of the elastic filament 42A shown in FIG. 8 can also be added with dyes, pigments, or metal powders such as aluminum, silver, gold, and tin, so that the elastic filament 42A or the body 421 can be made to have different colors or metallic colors and lusters.

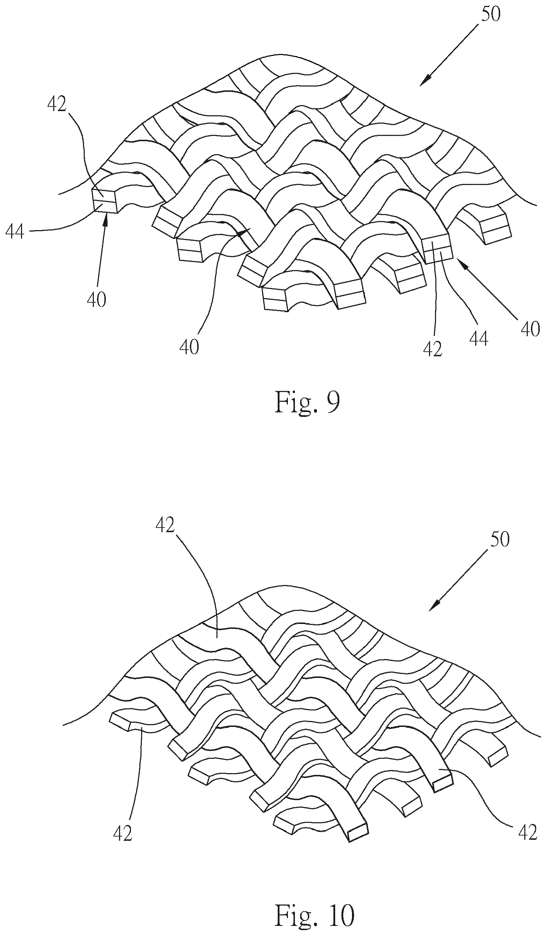

Since the composite filament 40 of the invention has high tension, tensile strength, low expansion and contraction rate, and low elasticity, it is capable of withstanding hooking and pulling by a crochet hook of a textile machine without breaking or stretching. Therefore, the composite filament 40 can be used as a main fiber of textiles, and is suitable for weaving with textile machines by using textile techniques (such as textile techniques of knitting, plain weaving, circular weaving) to form a textile 50 shown in FIG. 9 (FIG. 9 shows the composite filaments 40 are woven into a textile with warps and wefts), for example, a fabric. In addition to being capable of being used as a main fiber of a fabric, the composite filament 40 of the invention can also be used as a fiber for an inner layer or a base layer of the fabric, that is, the composite filament 40 can be used as a fiber in any part of the fabric without limitation.

After the textile 50 woven with the composite filament 40 is made into a final product, such as clothing, the clothing is immersed in water at an appropriate temperature, the shaping filament 44 of the composite filament 40 will be dissolved in the water, retaining only the elastic filament 42 and the elastic filament 42 is no longer constrained by the shaping filament 44 and is restored with stretchable elasticity. The clothing (the textile 50), as shown in FIG. 10, becomes a clothing (the textile 50) woven with the elastic filament 42. In this way, the fibers of the clothing are the elastic filaments 42, which have stretchable elasticity and are soft and flexible to provide comfortable wearing. The textile made with the composite filament 40 of the invention can be made into apparel, shoes, or bags (handbags, backpacks), and the apparel that can be made includes various kinds of clothing such as general clothes, swimwear, sportswear, rhythm pants, T-shirts, ribbons, etc. Taking apparel as an example, after a consumer purchases the apparel made of the composite filaments 40, the apparel is placed in water to dissolve the shaping filaments 44, and the elastic filaments 42 of the apparel after the dissolution process are restored with elasticity, making the apparel soft, flexible, close-fitting, suitable for wearing and have excellent tactile impression. In addition, the shaping filaments 44 can be dissolved during dyeing and shaping stages in a fabric making process, and it is not necessary to dissolve the shaping filaments 44 only after the fabric is completely made.

The composite filament 40 of the invention can also be used as various textile threads such as machine sewing thread, embroidery thread of machine embroidery/computerized machine embroidery or jacquard upper thread.

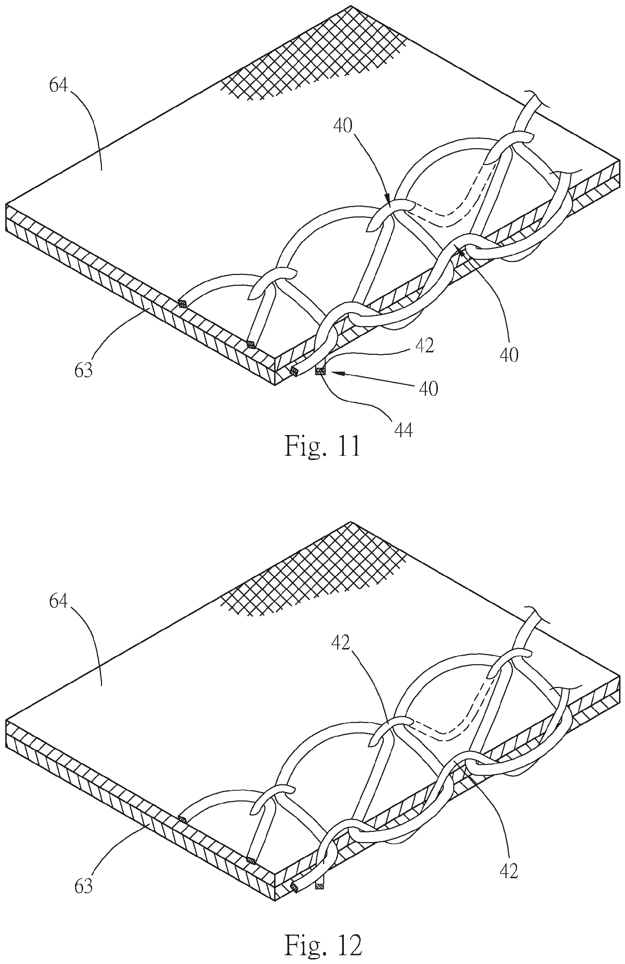

Please refer to FIG. 11 for a back enlarged schematic view of two-layer textiles 63, 64, which shows that the two-layer textiles 63, 64 are sewn by a sewing machine with the composite filaments 40 of the invention being used as sewing threads. Since the composite filament 40 of the invention has low elasticity, low expansion and contraction rate, and is capable of withstanding tensile force, the composite filament 40 can be used as a sewing thread to be sewn on textiles by a sewing machine.

When the textiles 63, 64 are placed in water, the shaping filaments 44 on the composite filaments 40 can be dissolved, so that the elastic filaments 42 can exhibit stretchable elasticity. In this way, as shown in FIG. 12, all the sewing threads of the textiles 63, 64 are the elastic filaments 42 with elasticity, and are capable of stretching elastically with the textiles 63, 64.

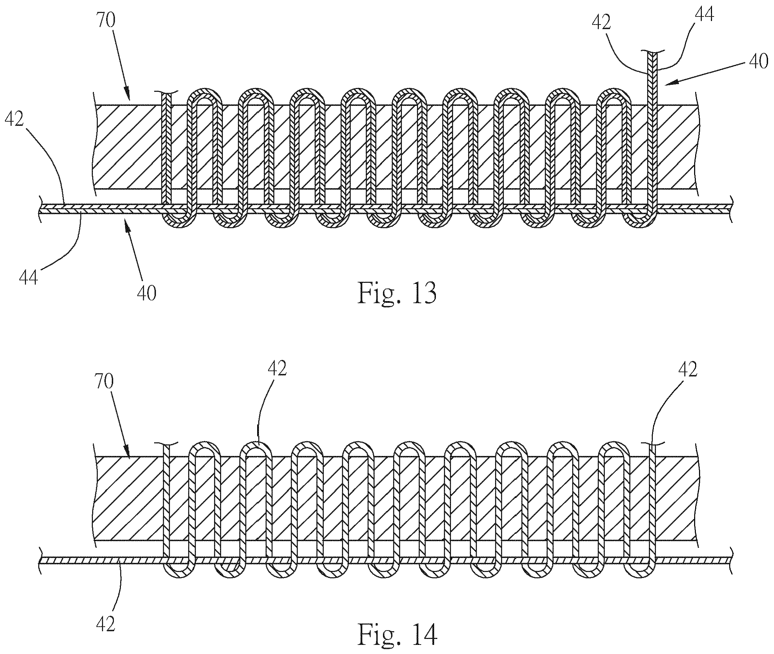

Please refer to FIG. 13 for a cross-sectional view of a textile 70, showing that the composite filaments 40 of the invention are used as embroidery threads to be embroidered on the textile (such as cloth) 70 with an embroidery machine in order to embroider a pattern.

When the textile 70 is placed in water, the shaping filaments 44 in the composite filaments 40 can be dissolved, and only the elastic filaments 42 are left. In this way, as shown in FIG. 14, all the embroidery threads on the textile 70 are the elastic filaments 42 with elasticity. If the textile 70 has elasticity, the elastic filaments 42 are capable of stretching elastically with the textile 70.

The invention combines the elastic membrane material 22 with the shaping membrane 24 to form the composite membrane material 20, so that the composite membrane material 20 is suitable for being cut. With the shaping membrane 24 restricting expansion and contraction of the elastic membrane material 22 and supporting the elastic membrane material 22, the elastic membrane material 22 can be effectively cut. Since the shaping membrane 24 has solubility, it is not required to separate the elastic filament 42 from the shaping filament 44 of the cut composite filament 40, which can simplify a manufacturing process of cutting the elastic membrane material 22.

Since the composite filament 40 cut out and made by the invention has physical phenomena of rigidity, low elasticity and low stretchability, and being capable of withstanding tensile force, the composite filament 40 can be directly provided for textile machinery to make textile products, and then the shaping filament 44 of the composite filament 40 is dissolved to retain the elastic filament 42, so that a final textile product is made of only the elastic filament 42, which overcomes the drawback of the conventional techniques that an elastic filament cannot be directly woven into a textile product.

The cutting method of the invention is capable of cutting out the composite filament with a fine width, thereby obtaining the fine elastic filament.

The above description is only preferred embodiments of the present invention and is not used to limit the present invention, and changes in accordance with the concepts of the present invention may be made without departing from the spirit of the present invention, for example, the equivalent effects produced by various transformations, variations, modifications and applications made to the configurations or arrangements shall still fall within the scope covered by the appended claims of the present invention.

## Claims

1. A method for cutting a composite membrane material with an elastic membrane material comprising:
manufacturing a composite membrane material, the composite membrane material being formed by combining an elastic membrane material with at least one shaping membrane, the elastic membrane material being made of high-molecular material with stretchability and elasticity; the shaping membrane being made of high-molecular polymer, having solubility and being capable of dissolving in water; a rigidity of the shaping membrane being greater than that of the elastic membrane material, and a ductility of the shaping membrane being lower than that of the elastic membrane material; and
cutting the elastic membrane material and the shaping membrane of the composite membrane material with a cutting device, and cutting the composite membrane material into a plurality of composite filaments, each of the composite filaments being a composite with at least two layer structures, comprising an elastic filament and at least one shaping filament, the elastic filament being formed by being cut out from the elastic membrane material; and the shaping filament being formed by being cut out from the shaping membrane.

2. The cutting method as claimed in claim 1, wherein a material of the shaping membrane is polyvinyl alcohol.

3. The cutting method as claimed in claim 1, wherein the composite membrane material is conveyed to the cutting device in a continuous conveying manner for cutting; each of the composite filaments after cutting is wound into a roll, and the elastic filament and the shaping filament of each of the composite filaments are kept combined with each other.

4. The cutting method as claimed in any one of claims 1 to 3, wherein the composite filament is placed in water to dissolve the shaping filament in the water and to retain the elastic filament.

5. A composite filament with an elastic filament, the cross-section of the composite filament is rectangular, wherein:
the composite filament is a filament with a continuous length, the cross-section thereof is a layered structure with at least two layers of an upper layer and a lower layer, the composite filament comprises an elastic filament and at least one shaping filament,
the elastic filament is made of high-molecular material, has stretchability and
elasticity; the shaping filament is made of high-molecular material, has solubility and is capable of dissolving in water; a rigidity of the shaping filament is greater than that of the elastic filament, and a ductility of the shaping filament is lower than that of the elastic filament.

6. The composite filament as claimed in claim 5, wherein a dissolution temperature of the shaping filament is lower than a melting point of the elastic filament.

7. The composite filament as claimed in claim 5, wherein a material of the shaping filament is polyvinyl alcohol.

8. The composite filament as claimed in claim 5, wherein two sides of the composite filament are cut planes.

9. The composite filament as claimed in claim 5, wherein the composite filament can be used in textile machines, sewing machines, or embroidery machines.

10. The composite filament as claimed in any one of claims 5 to 8, wherein the composite filament is placed in water to dissolve the shaping filament in the water and to retain the elastic filament.
